# EUROPEAN PATENT SPECIFICATION

(11) **EP 1 997 337 B1**
(45) Date of publication and mention of the grant of the patent: **15.08.2018**
(21) Application number: 07705270.2
(22) Date of filing: 23.02.2007
(51) Int. Cl.: H04W 12/06, H04W 12/08, H04W 92/02, H04W 36/00, H04L 29/06

(54) **SYSTEM AND METHOD FOR CONTROLLING NETWORK ACCESS**
SYSTEM UND VERFAHREN ZUR KONTROLLE DES NETZWERKZUGANGES
SYSTÈME ET PROCÉDÉ DE COMMANDE D'ACCÈS À UN RÉSEAU

(30) Priority: 28.02.2006 GB 0604001; 02.05.2006 GB 0608589
(43) Date of publication of application: 03.12.2008
(73) Proprietor: Orange SA, London W1U 7DZ (GB)
(72) Inventor: TUTCHER, Benomy, Bristol BS32 4QJ (GB); OUADUICH, Nasser, Bristol BS32 4QJ (GB)
(86) International application number: PCT/GB2007/000639
(87) International publication number: WO 2007/099295

(56) References cited:
- EP-A- 1 311 136
- WO-A-01/17310
- WO-A-03/036904
- WO-A-03/088577
- GB-A- 2 397 731

## Description

### Field of the Invention

The present invention relates to telecommunication systems that can be accessed via an unlicensed-radio access network, and is particularly, but not exclusively, related to the authorisation and registration of a mobile terminal via unlicensed radio access networks.

### Background of the Invention

Cellular mobile communication systems such as Global System for Mobile communications (GSM), Universal Mobile Telecommunications Services (UMTS) or Code Division Multiple Access (CDMA) typically consist of a core network portion and a plurality of base stations connected to the core network portion. Each base station is assigned a specific coverage area that defines a so-called cell, and a mobile station located within the coverage area of the cell is able to establish a radio connection with the base station using a predetermined radio frequency within a licensed frequency range. Thus the base station is a connection point between the mobile station and the core network. Unlicensed-radio access networks, that is to say networks that utilise radio technology that does not require an operating licence from a licensing authority, provide additional connection points to cellular mobile communication systems. These additional access networks typically comprise a connection point in the form of an access controller, which, as for the base station, is connected to the core network of the cellular mobile communication systems over the conventional network interface. Thus when viewed from the core network portion, the access controller appears like a base station controller of a licensed radio access network.

The unlicensed access controller is connected to a plurality of low-power unlicensed radio transceivers, or access points, each capable of supporting an unlicensed radio connection with a mobile station (MS). Suitable unlicensed-radio formats include digital enhanced cordless telecommunications (DECT), wireless Local Area Network (LAN) and Bluetooth.

In conventional cellular networks, such as GSM, the identity of a mobile station is checked and its operation and right to access the network are authenticated using various elements within the core network portion, such as the Home Location Register (HLR). In relation to the unlicensed radio access network, it is necessary to check whether or not the mobile station is authorised to access such an access network and whether the mobile station is authorised to access the core network portion. International patent application having publication number WO2005104592 describes an arrangement in which the access controller comprises a screening module for monitoring information received from a mobile station. Authorisation of an access request from the mobile station involves two processes: a first in relation to the core network to which the mobile station has subscribed and a second in relation to observed behaviour of the mobile station. In relation to the first process, the screening module is adapted to compare the subscriber identity with a preconfigured list of network operator identities; in relation to the second process, the screening module is adapted to determine patterns in the data received from the mobile station. The first therefore involves maintaining a list of permitted and/or barred network operator identities, while the second involves monitoring and processing data passing between the access network and the mobile station. A problem with the first is that it works on a preconfigured list and thus requires the list to be maintained and updated from a provisioning system, and a problem with the second is that it is dependent on the screening module having rules that define acceptable and non-acceptable behaviour, and also that the monitoring, comparing and rejecting/accepting involves continual processing on the part of the access network.

International patent application having publication number WO 03/088577 A1 describes a method and a system for authenticating a user's data transfer device (e.g. a WLAN terminal, a Bluetooth terminal, etc.) for access to services provided by a service access point. The authentication method, as disclosed in the application, begins by the data transfer device connecting to a service access point and supplying the service access point with the user's mobile subscription identification data, which is then utilised to validate the user's access rights from the user's mobile phone system (e.g. a GSM network, etc). WO 03/088577 further discloses the service access point generating and transmitting a password to the user's mobile, which could be separate from the user's data transfer device, via GSM network, if valid access rights exist for the user in relation to accessing the data transfer device. The delivered password is then used to authenticate the user's data transfer device with the service access point.

European patent application EP 1311136 A1 discloses a method of making a call connection of a user to a second network via an authenticated call connection with a first network. The application teaches that a terminal acquires an authentication key for a second communication network from a first communication network prior to requesting a service from the second communication network. In addition, EP 1311136 discloses that the authentication key is utilised by the terminal for authenticating itself with the second network.

An object of the present invention is to provide an improved utilisation of unlicensed and licensed radio access networks.

### Summary of the Invention

In accordance with a first aspect of the present invention, there is provided a method of authenticating a request from a mobile station to conduct a communications session in a telecommunications system according to claim 1. A second aspect of the present invention includes an authentication system according to claim 12. A third aspect of the present invention includes a mobile terminal according to claim 20. Further aspects of the present invention include a computer program and a corresponding computer readable carrier according respectively to claims 21 and 22. Conveniently the mobile station is authenticated to communicate via a single radio access node during the data communication; in relation to usage of network resources, the plurality of radio access nodes associated with the existing - e.g. cellular - communications session use a different radio access technology to that utilised by the given access node in the to-be-authenticated communications session. Thus in one application of embodiments of the invention the first authentication service is a cellular telecommunications network authentication service and the second authentication service comprises an unlicensed mobile access (UMA) access point authentication service.

In this aspect of the invention, an existing and authenticated communications session is utilised to set up and authenticate another communications session. In one arrangement the existing communications session is used to transmit a message to the mobile station, the message being a message comprising instructions on how to conduct authentication and including, as a destination address, a mobile station international directory number (MSISDN). In one arrangement the message is an alphanumeric message such as an Short Message Service (SMS) message, an Unstructured Supplementary Services Data (USSD) message or an instant message, whilst in others the message can include images and be embodied as a Multimedia Messaging Services (MMS) message, email message etc.

Alternatively or in addition the data communication comprises receiving a message from said mobile station, the received message comprising a token for authenticating said mobile station using said second authentication service. Again, the received message might be an SMS, a USSD or an MMS message - embodied as a message containing alphanumeric strings and/or associated graphics, and in this case the message can include, as an originating address, a mobile station international directory number (MSISDN).

Conveniently the second authentication service can be performed in response to a registration request received via the given radio access node; in one arrangement the second authentication service initially rejects the registration request outright, whilst in an alternative arrangement the second authentication service partially rejects the registration request. The request is partially rejected in so far as e.g. communications sessions requiring use of the link between the given radio access node and the switch in the telecommunications system require authentication. In arrangements where the second authentication service is triggered in response to receipt of a registration request, receipt of this request serves to trigger conducting the data communication.

In a preferred arrangement the second authentication service comprises transmitting a token to a data communications device which is separate from said mobile station, and the second authentication service comprises the data communications device comparing said token and the token received from the mobile station in accordance with a predetermined criterion, and authenticating the mobile station in the event that the predetermined criterion is satisfied. The step of authenticating the mobile station can involve transmitting a control message to the mobile station so as to trigger transmission of a further registration request from the mobile station, and, when such a further registration request is received, the second authentication service authenticates the mobile station.

In accordance with a further aspect of the present invention there is provided an application configured to perform the second authentication service. Preferably the application is executed by a data communications device connectable to a switching system making up the telecommunications system and the given access node so as to transmit and receive messages in the manner described above. More specifically the data communications device is equipped with software which, in use, causes the communications device to perform the steps described above.

Embodiments of the invention are particularly suited to scenarios in which the mobile station has been authenticated in respect of a said second type of communications session between the given radio access node and the mobile station only. In this situation the mobile station is considered to be in an authenticated state in relation to the given radio access node, but in an unauthenticated state in relation to communications that require use of the telecommunications system. Such a scenario might occur when the second authentication service includes two stages, one of the stages being dependent on the mobile station performing certain actions, and both stages requiring successful completion before a request for a second type of communications session can be considered fully authenticated so as to provide the mobile station with full access to the telecommunications system. In the event that a required action has not been performed, a request for a second type of communications session will be treated as a trigger for handover so that the request can be processed via the first type of communications session. Thus, embodiments of the invention can be used to trigger handover so as to enable a request, which originates as a second type of communications session, to be served by a first type of communications session.

As described above, some known methods of controlling unlicensed network access involve interrogating a subscriber database; by comparison, in embodiments of the invention the registration request is rejected in response to the receipt of the registration request, and without looking up any subscriber- specific records, and followed by a message that serves to instruct the user of the mobile station to perform certain actions. Once the user has performed the actions - as identified via the predetermined message - authentication can proceed. In one arrangement this involves triggering the mobile station to send another registration request, which, when received, is validated and registration allowed.

An advantage of this aspect of the invention is that there is no requirement to hold and maintain records of subscriber data for use in validating access requests. Further, there is no need to refer to billing records before sending the rejection message. In embodiments of the invention, identifiers of mobile stations which have send a registration request are stored, and subsequently matched against an identifier associated with a predetermined message in order to complete the authentication. Further, a list is stored, but not for use in validating access requests and is of only those mobile stations that are currently validated to access the radio access node; thus in comparison with the list stored in known systems, this list is dynamic.

Further features and advantages of the invention will become apparent from the following description of preferred embodiments of the invention, given by way of example only, which is made with reference to the accompanying drawings.

### Brief Description of the Drawings

Figure 1 is a schematic block diagram showing a telecommunications system comprising an authentication application according to an embodiment of the invention;
Figure 2 is a schematic timing diagram showing interaction between the components of Figure 1 according to an embodiment of the invention;
Figure 3 is a schematic flow diagram showing message handling functionality associated with the authentication application shown in Figure 1;
Figure 4 is a schematic timing diagram showing interaction between the components of Figure 1 according to a second embodiment of the invention;
Figure 5 is a schematic timing diagram showing interaction between the components of Figure 1 according to a third embodiment of the invention;
Figure 6 is a schematic timing diagram showing interaction between the components of Figure 1 according to a fourth embodiment of the invention;
Figure 7 is a schematic timing diagram showing interaction between the components of Figure 1 according to a fifth embodiment of the invention; and
Figure 8 is a schematic timing diagram showing interaction between the components of Figure 1 for the partial authentication process shown in Figure 7.

### Detailed Description of the Invention

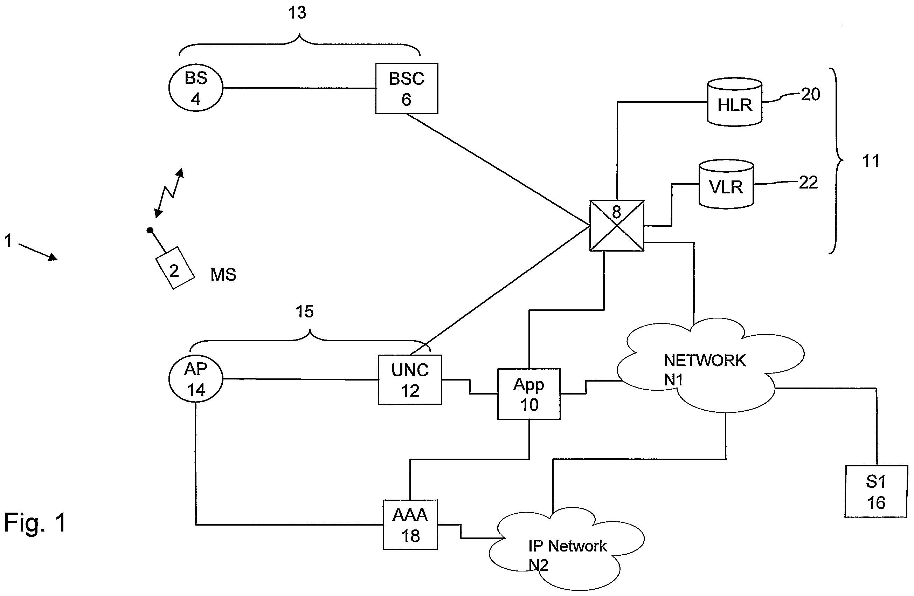

As described above, embodiments of the present invention are concerned with utilising an existing communications link as a means of setting up an authenticated communications session over a communications link other than the existing communications session. The various parts and steps involved in realising this authentication process will be described in detail below, but first, and in order to aid understanding of embodiments of the invention, the parts and operation of a conventional mobile network will be presented with reference to Figure 1.

Figure 1 shows a telecommunications system 1 having a core network 11, comprising mobile switching centres (MSC) 8, home location register (HLR) 20 and visitor location register (VLR) 22, and a radio access network 13, comprising a base station controller (BSC) 6 and a base station (BS) 4. These components are well known to those skilled in the art and will not be described in further detail here. Figure 1 also shows the MSC 8 being connected to other mobile and fixed-line networks N1 (e.g. ISDN and PSTN networks) via one or more gateway nodes (not shown).

In addition to the GSM radio access network provided by the BS and BSC 4, 6 the telecommunications system 1 includes a second radio access network 15 comprising an Unlicensed Network Controller (UNC) 12 and an Access Point (AP) 14. Hereinafter this will be described as an unlicensed-radio access network 15; by unlicensed-radio is meant any radio protocol that does not require the operator running the mobile network to have obtained a license from a regulatory body. In general, such unlicensed-radio technologies are low power and thus offer a restricted range compared to licensed mobile radio services. The radio interface associated with the AP 14 may utilise any suitable unlicensed-radio protocol, for example a wireless LAN (W-LAN) protocol, Bluetooth or Digital Enhanced Cordless Telecommunications (DECT) protocols.

Figure 1 only shows one access point AP 14, but it will be appreciated that typically one or several hundreds of these elements may be included in the unlicensed-radio access network 15. As can be seen from Figure 1, communications via the access points AP 14 are controlled by a network controller UNC 12, which communicates with the MSC 8 over the GSM standard A interface so as to enable the mobile station 1 to access the GSM network components 8, 20 etc. The unlicensed radio access network 15 emulates the operation of the BS and BSC 4, 6 such that, when viewed from e.g. MSC 8, it looks like a conventional GSM radio access network.

The interface between the AP 14 and the network controller UNC 12 is provided by a packet-switched broadband network, which may be a fixed network. Suitable networks might include those based on ADSL, Ethernet, LMDS, or the like. As also shown in Figure 1, the AP 14 may serve as a dedicated access point to the IP network N2, via authentication server (AAA) 18. In common configurations the AP 14 serves as a transparent access point, simply relaying all information at the IP level and above between the mobile station 2 and the network components 12, 18. Accordingly, once registered with the unlicensed radio access network 15, the mobile station 2 establishes a connection with the UNC 12 or AAA server 18 without recognising the AP 14 as a node in the connection. Similarly the UNC 12 can establish a connection with the mobile station 2 directly.

Turning now to the configuration of the mobile station MS 2, in order to communicate with components of the unlicensed radio access network 15, the MS 2 includes firmware and software for sending and receiving IP data to and from IP applications via networks N1 and/or N2. When transmitted via the UNC 12, and in order to appear as conventional GSM traffic, the UNC 12 encapsulates the IP traffic in accordance with Section 6.1.1 entitled "Up CS Domain Signalling Protocol Architecture" of UMA Architecture (Stage 2) R1.0.4 (2005-05-02); the encapsulated data includes a location indicator, enabling the MSC 8 and other GSM processing applications to identify the radio access portion (unlicensed or licensed) that conveyed the traffic.

In a conventional GSM network, a mobile station is authenticated and validated when it registers with any given MSC 8, and, subject to inter-operator agreement and constraints, registration serves to authenticate the MS 2 in respect of communications sessions involving any other licensed radio access network (e.g. when the mobile station 2 moves and the radio link is handed over to a different BS 4 and BSC 6). In other words, when MS 2 has been authenticated by the telecommunications system, the MS 2 is not required to re-register when it receives service from a different licensed radio access network.

However, and by contrast, registration of the MS 2 is typically required each time the MS 2 moves within range of a different AP 14.

In embodiments of the invention, and as will be described in detail below, authentication is performed via an already authenticated communications link, which typically will correspond to a communications session that is already in existence between the MS 2 and the telecommunications system. Turning again to Figure 1, embodiments of the invention include an application server App 10, which is arranged to coordinate such inputs. The application 10, which can be configured to run independently of the radio access network components and of the core network components such as MSC 8, is arranged to receive messages directly from components including the MSC 8, the unlicensed network controller UNC 12 and the IP authentication server AAA 18. In addition the App 10 is configured to receive data from web server S1 16, which operates so as to issue access data for use in validating the authentication requests. The App 10 is arranged to extract content from the various messages and process the content in the manner described below so as to determine how, if at all, to authenticate the MS 2; the App 10 is further configured to issue access commands on the basis of the determination.

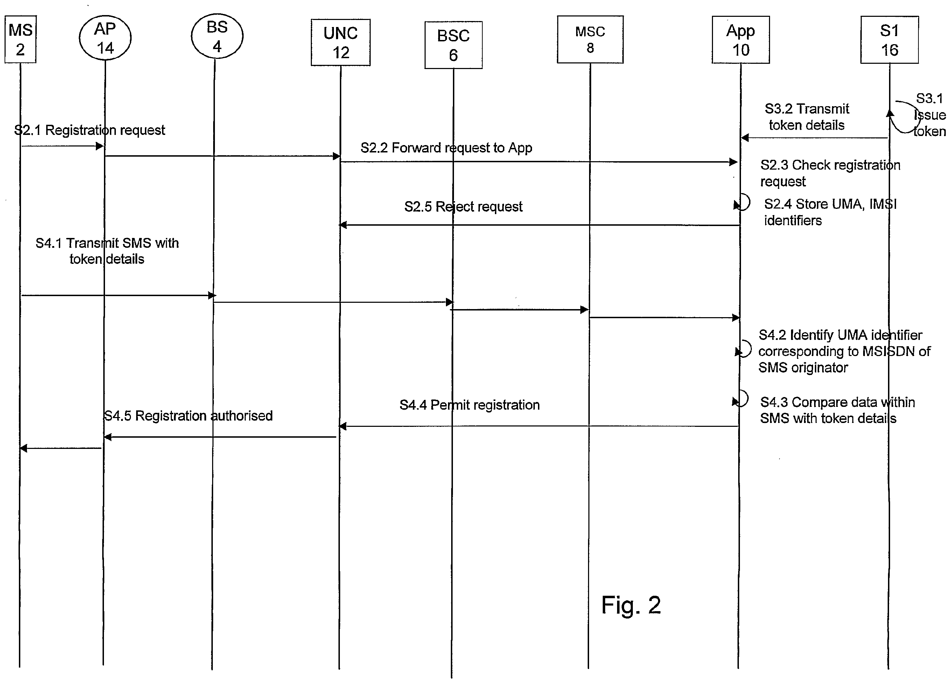

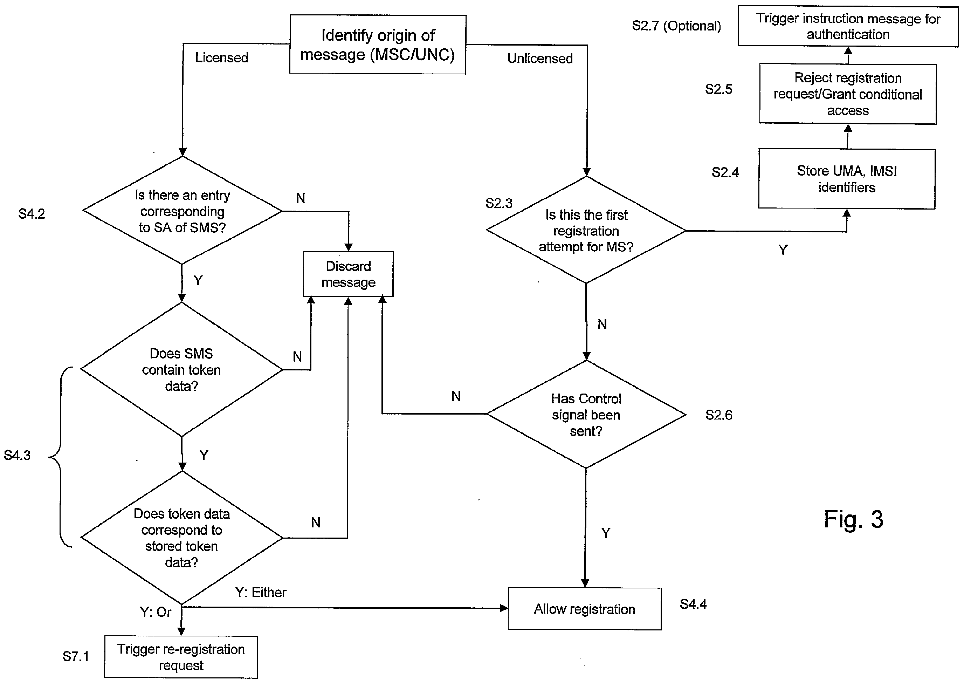

In a first embodiment, it is assumed that MS 2 arrives within the vicinity of AP 14 whilst registered with a GSM network and thus authenticated for a GSM communications session. As shown in Figure 2, at step S2.1, the MS 2 issues a registration request, in accordance with the Unlicensed Mobile Access (UMA) technical specification R1.0.4 (2005-05-02), this request being relayed by the Access Point AP 14 to the network controller UNC 12. Once received at the network controller UNC 12, the registration request is forwarded to App 10; referring also to Figure 3, upon receipt of a first registration request message the App 10 checks the registration request in step S2.3 by identifying the type of message (UMA message), the identity of MS 2, and the licensed mobile access identity of MS 2 (e.g. international mobile subscriber identity (IMSI)). The App 10 then stores these two identities (step S2.4) prior to rejecting the registration request (step S2.5).

In a preferred arrangement the web server S1 can serve web pages upon demand to a client terminal in the vicinity of MS 2 (e.g. electronic till (not shown)), In one example, the unlicensed radio access network 15 is located within a coffee shop or library, and use of the facilities of the shop/library is conditional upon the user of the MS 2 performing a particular event, such as purchasing a product (e.g. a coffee) or a service (e.g. photocopying). The act of purchasing the product or service involves the electronic till retrieving a ticket from the web server S1, causing the web server S1 to issue a token (step S3:1) and transmit the token data both to the client terminal located in the shop/library and to the App 10, which stores the token data (step S3.2). The token data transmitted to the client terminal includes instructions as to how the user of the MS 2 can make use of the network resources available therein, and in one arrangement includes instructions in the form of "Send an SMS message specifying the voucher number on this token to 123456".

Accordingly and referring back to Figure 2, the MS 2 transmits an SMS message including the specified information (step S4.1); in accordance with conventional methods the SMS is transmitted to a network node corresponding to destination number 123456, which in this example is the App 10. When received, the App 10 compares the token number contained within the SMS message with the number stored at step S3.2, and compares the originating address of the SMS message with the network identifiers stored at step S2.4 (steps S4.2, S4.3). These comparison steps serve to check that a purchase has been made and to identify which of the devices that has requested registration corresponds to this token.

In the event that the originating identity of the SMS matches an identity previously stored at step S2.4 and that the tokens match, the App 10 transmits a message to the network controller UNC 12, instructing authentication of the MS 2 (step S4.4); thereafter, and while the MS 2 continues to be located within the vicinity of the AP 14, communications proceed with the MSC 8 via the unlicensed radio access network 15.

Thus, this embodiment of the present invention provides a method of authenticating a request for access to a telecommunications system which involves the App 10 receiving at least two messages: a registration request, and a predetermined message (such as an SMS with token details). The App 10 receives a registration request message from the mobile station (S2.2), and transmits a rejection message in response to the receipt of the registration request message (S2.5), without referring to any subscriber specific records. Further, once the App 10 has received the registration request the App 10 checks the registration request in step S2.3 and stores (S2.4) an identifier relating to the mobile station from which the registration request came. When the App 10 receives a predetermined message from a network node (S4.1), the App 10 determines whether an identity in the message matches the stored identifier (S4.2 and S4.3). If it does, the App 10 completes the authentication of the mobile station, by sending a message to permit registration (S4.4). This means that the rejection step of the authentication is performed on the basis of criteria other than that derivable from billing records held by the telecommunications system in association with said mobile station. Instead, the criteria are that the mobile station is in the vicinity of the AP 14, and has sent a registration request message to connect to a network, such as a GSM network.

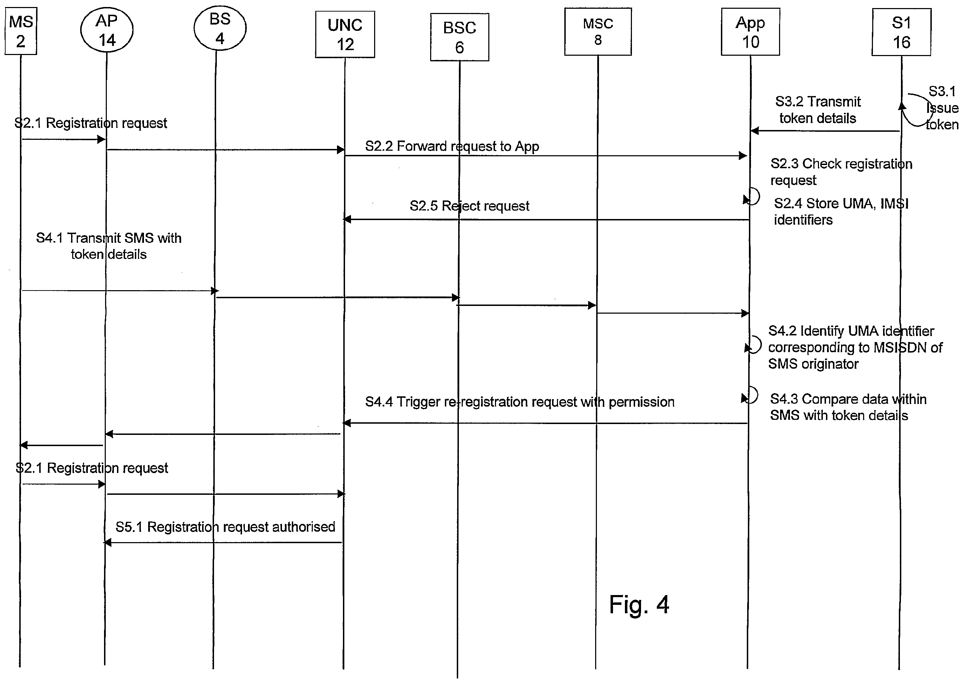

An alternative authentication procedure is shown in Figure 4, where it is assumed that the network controller 12 is responsive to an authentication instruction sent from the App 10 at step S4.4 so as to trigger the MS 2 to issue a re-registration request. In other words, in this arrangement a UMA message is sent from the network controller 12 to trigger a re-registration request. Once such a request is received, and on the basis of the authentication instruction received at step S4.4, the network controller 12 authenticates the request at step S5.1.

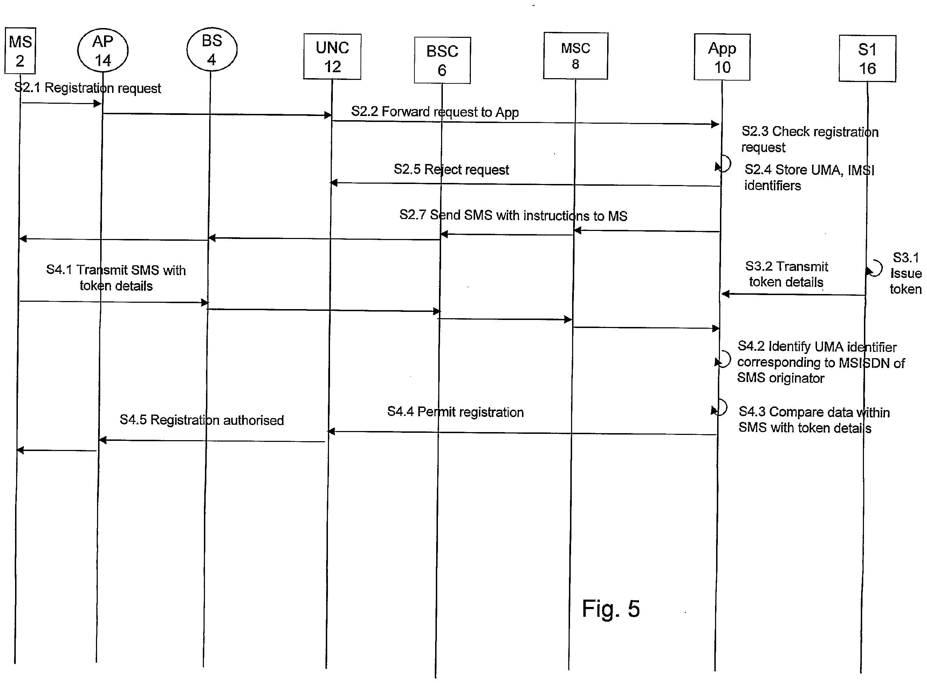

Figure 5 shows a further alternative arrangement, in which, in addition to sending a rejection request at step S2.5, the App 10 transmits an SMS message to the MS 2 at step S2.7. This message includes instructions as to how registration of the unlicensed radio access network can be effected; in one arrangement this message could serve to prompt the user of MS 2 to buy a product or service, thereby causing the web server S1 16 to issue a token in the manner described above. This therefore differs from the first and second embodiments in so far as it is the transmission of an SMS to the MS 2 which triggers issuance of the token and subsequent steps.

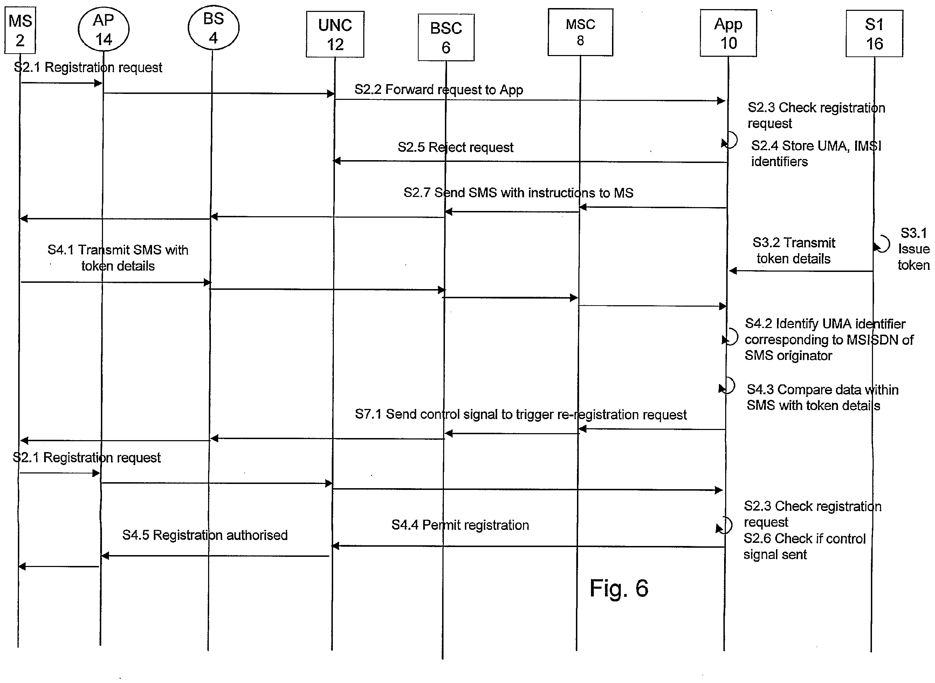

Turning now to Figure 6, in a further alternative arrangement, successful matching between token data transmitted from the MS 2 at step 4.1 and token data transmitted from the server S1 at step S3.2 triggers the App 10 to transmit a control signal to the MS 2 (step S7.1). This control signal is designed to prompt the MS 2 to register (again) with the UMA network, and in a preferred arrangement the control signal is embodied as a binary SMS. When received by the MS 2 the control signal is immediately passed to the SIM and an application running on the SIM prompts a further registration attempt. As can be seen from Figures 3 and 6, this second registration request is passed directly to the App 10, which determines this to be a second registration event (on the basis of control signal having been sent, as determined at step S2.6), and triggers authentication of the mobile in respect of this second registration request. Whilst Figure 6 shows the App 10 being configured to transmit an instruction SMS at step S2.7, it will be appreciated that the control signal aspects of this embodiment (step S7.1) could be combined with the arrangement of Figure 2, which does not require the process to be triggered by an instruction SMS message.

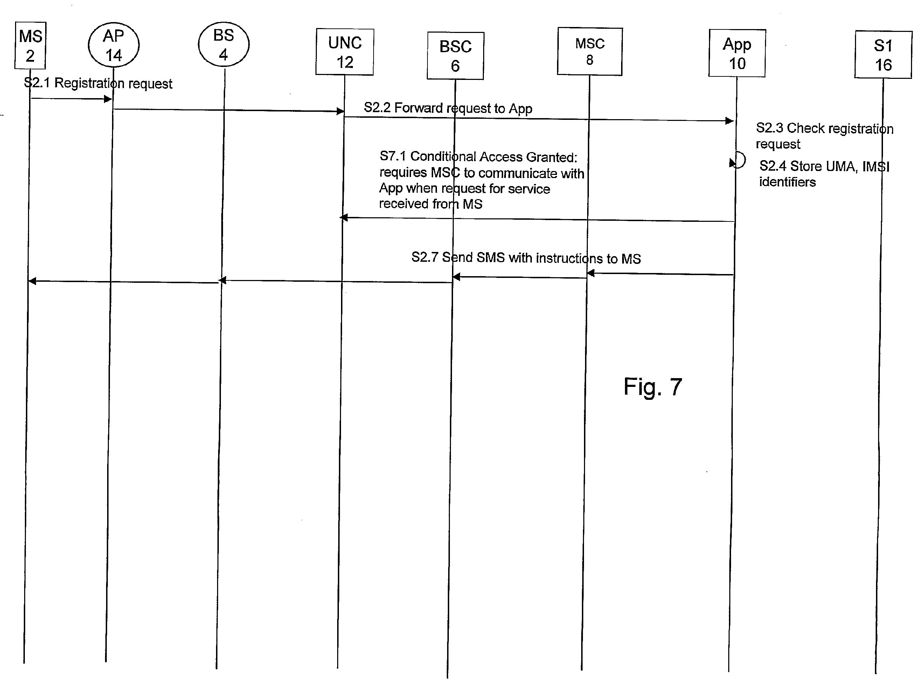

Turning now to Figure 7, instead of rejecting the request at step S2.5, the App 10 can transmit a partial rejection instruction to the network controller 14, causing the network controller UNC 12 to allow the MS 2 to register in relation to communications between the UNC 12 and the MS 2 (relayed via the AP 14) only. In addition, the App 10 is triggered to transmit a message to the MS 2 with instructions for gaining full access to the network resources (step S2.7).

Assuming the subscriber subsequently completes the actions required to effect full registration (e.g. as per Figures 5 or 6), when the subscriber subsequently submits a request for access to network services, the request will be served in the normal way. However, if the subscriber has not completed the actions necessary for obtaining full authentication, the request for network services will be declined and the subscriber will instead be connected to an Interactive Voice Response system (configured e.g. to inform the subscriber of the steps to be taken for authentication to proceed). The subscriber is thus attached to the UMA network but unable to access any network resources, either via the UMA or the GSM network!

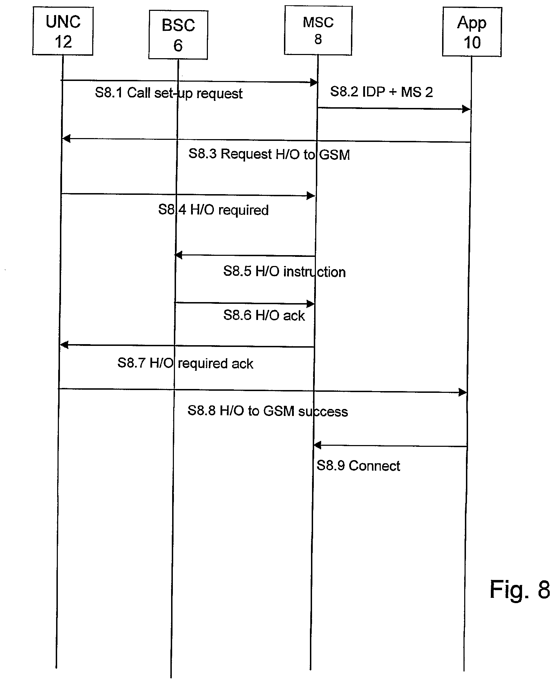

This problem can be solved by forcing handover between networks as will now be described with reference to Figure 8: at steps S8.1 and S8.2 the call set-up request is transmitted to the App 10 via the UNC 12 and MSC 8; once the App 10 has determined that the MS 2 has not fulfilled the registration conditions required to obtain access to the core network portion via the UMA network 15, the App 10 sends a message including a request for handover to GSM (step S8.3); when received by the UNC 12, this triggers a handover requirement request message to be transmitted to the MSC 8 (much as occurs in response to the mobile station indicating that the strength of signals transceived to and from the UNC 12 have fallen below a predetermined level). This, in turn, causes the MSC 8 to transmit a handover instruction message to the BSC 6 (step S8.5), and in accordance with standard methods the BSC 6 acknowledges the instruction (step S8.6), enabling the MSC 8 to acknowledge the handover request received at step S8.4. The UNC 12 then sends a message directly to the App 10, confirming that handover between radio access networks has been completed, and in response the App 10 is configured to issue a Connection instruction to the MSC 8 (step S8.9). Since the MSC 8 has been involved in the handover procedure it knows to route the connection via the BSC 6 instead of via the UNC 12.

The solution to the problem is therefore essentially a handover process, and one which occurs in response to authentication in respect of one radio access network technology being incomplete - incomplete in so far as the subscriber has successfully attached to a given radio access network, but is unable to make use of further network resources such as those required to effect call connections, message sending etc.

A particular advantage of this latter embodiment is it does not require the initial registration request to be rejected, and is thus compatible with the UMA standard registration process.

In the examples described above, the existing communications session is a GSM communications session and the to-be-authenticated communications session involves communication via an unlicensed radio access network; embodiments of the invention could, however, also be applied when the existing communications session is conducted via the unlicensed radio access network, and the to-be authenticated communications session is, for example, an Internet Protocol (IP) communications session. In this example, and because both communications sessions make use of the same radio access node (AP 14), the registration request is triggered by selection of an IP client application running on the MS 2. Such a request would be transmitted to the IP authentication server AAA 18 (via AP 14), which would forward the registration request, via Session Initialisation Protocol (SIP) or similar, to the App 10 for handling in accordance with the methods described above (transmitting the rejection message at step S2.5 and authorisation messages at step S4.4 to server AAA instead of to unlicensed network controller 12).

The above embodiments are to be understood as illustrative examples of the invention. Further embodiments of the invention are envisaged. For example, whilst in the foregoing embodiments it is assumed that the BS 4 and AP 14 are separate from one another, they could alternatively be co-located. In addition, whilst the above embodiments describe step S4.1 as emanating from the mobile station that requests registration, this message sent at step S4.1 could instead be transmitted from another device which, according to subscriber records held by the GSM network 11, is grouped with MS 2. Such an arrangement might be useful in the event that MS 2 is unable to transmit or receive SMS messages, but is capable of conducting GSM calls and is Wi-fi enabled.

It is to be understood that any feature described in relation to any one embodiment may be used alone, or in combination with other features described, and may also be used in combination with one or more features of any other of the embodiments, or any combination of any other of the embodiments.

## Claims

1. A method of authenticating a request from a mobile station (2) to conduct a communications session in a telecommunications system (1), the telecommunications system comprising:
a plurality of radio access nodes (4, 14); a first authentication service for authenticating said mobile station for a first type of communications session, in which said mobile station is authenticated to communicate via a first radio access node of the plurality of radio access nodes (4), such that performance of the first authentication service serves to authenticate the mobile station in respect of communications sessions of the first type involving any radio access node of the plurality of radio access nodes other than the first radio access node; and
a second authentication service for authenticating said mobile station for a second type of communications session, in which said mobile station is authenticated to communicate via a given radio access node (14), and wherein performance of the second authentication service is required for the second type of communications sessions involving radio access nodes other than said given radio access node,
said first and second types of communications session each having an unauthenticated state and an authenticated state,
said method comprising conducting data communication with the mobile station, during a performance of at least part of said second authentication service whereby said mobile station is to enter into an authenticated state for a new communications session of said second type, by conducting data communication via an existing communications session of said first type, when the mobile station is in an authenticated state for said existing communications session of said first type and wherein said data communication comprises receiving a message containing an authentication token from said mobile station,
wherein prior to conducting said data communication with said mobile station and responsive to receipt of a registration request message from the mobile station (S2.2), said second authentication service rejects said registration request (S2.5) and thereafter monitors for receipt of predetermined data from the mobile station via the communications session of the first type (S4.1) so as to authenticate the mobile station to conduct a second type of communications session, said predetermined data comprising the authentication token, wherein said plurality of radio access nodes comprise cellular telecommunications network access nodes and said first authentication service is a cellular telecommunications network authentication service, and
wherein said given radio access node comprises an unlicensed mobile access, UMA, access point and said second authentication service comprises an unlicensed mobile access, UMA, access point authentication service.

2. A method according to claim 1, further comprising notifying instructions on how to conduct authentication to a user of said mobile station.

3. A method according to claim 1 or claim 2, wherein said message containing said authentication token includes as a destination address a mobile station international directory number, MSISDN.

4. A method according to claim 1, wherein said authentication token comprises an alphanumeric string for use in authenticating said mobile station using said second authentication service.

5. A method according to claim 1 or claim 4, wherein said authentication token is contained within a message having as an originating address a mobile station international directory number, MSISDN.

6. A method according to any one of the preceding claims, in which said second authentication service is performed in response to receipt of said registration request via the given radio access node.

7. A method according to any one of the preceding claims, wherein said second authentication service comprises transmitting a token to a data communications device which is separate from said mobile station.

8. A method according to claim 7 and claim 1, in which the second authentication service comprises the data communications device comparing said token and the authentication token received from the mobile station in accordance with a predetermined criterion, and authenticating the mobile station in the event that the predetermined criterion is satisfied.

9. A method according to claim 7 and claim 1, in which the second authentication service comprises the data communications device comparing said token and the authentication token received from the mobile station in accordance with a predetermined criterion, and transmitting a control message to the mobile station in the event that the predetermined criterion is satisfied, said control message being configured so as to trigger transmission of a further registration request from the mobile station.

10. A method according to claim 9, in which the second authentication service comprises authenticating the mobile station in response to receipt of said further registration request.

11. A method according to any one of the preceding claims, wherein in said second authentication service, said mobile station is authenticated to communicate via a single radio access node.

12. An authentication system for authenticating a request from a mobile station (2) to conduct a communications session in a telecommunications system (1), the telecommunications system comprising:
a plurality of radio access nodes (4, 14); a first authentication service for authenticating said mobile station for a first type of communications session, in which said mobile station is authenticated to communicate via a first radio access node of the plurality of radio access nodes (4), such that performance of the first authentication service serves to authenticate the mobile station in respect of communications sessions of the first type involving any radio access node of the plurality of radio access nodes other than the first radio access node; and
a second authentication service for authenticating said mobile station for a second type of communications session, in which said mobile station is authenticated to communicate via a given radio access node (14), and wherein performance of the second authentication service is required for second type of communications sessions involving radio access nodes other than said given radio access node,
said first and second types of communications session each having an unauthenticated state and an authenticated state,
the authentication system being arranged to conduct data communication with the mobile station, during a performance of at least part of said second authentication service whereby said mobile station is to enter into an authenticated state for a new communications session of said second type, said data communication being conducted by the authentication system via an existing communications session of said first type, when the mobile station is in an authenticated state for said existing communications session of said first type,
and wherein the authentication system is arranged to receive a message containing an authentication token from said mobile station, whereby to conduct said data communication,
wherein, prior to conducting said data communication with said mobile station and responsive to receipt of a registration request message from the mobile station (S2.2), said second authentication service is arranged to reject said registration request (S2.5) and thereafter to monitor for receipt of predetermined data from the mobile station (S4.1) so as to authenticate the mobile station to conduct a second type of communications session, said predetermined data comprising the authentication token, wherein said plurality of radio access nodes comprise cellular telecommunications network access nodes and said first authentication service is a cellular telecommunications network authentication service, and
wherein said given radio access node comprises an unlicensed mobile access, UMA, access point and said second authentication service comprises an unlicensed mobile access, UMA, access point authentication service.

13. An authentication system according to claim 12, wherein said plurality of radio access nodes and said given access node use different radio access technologies.

14. An authentication system according to any one of claim 12 to claim 13, wherein said authentication token transmitted to the mobile station comprises alphanumeric instructions on how to conduct authentication.

15. An authentication system according to any one of claim 12 to claim 14, wherein said predetermined data comprises a token for authenticating said mobile station using said second authentication service.

16. An authentication system according to claim 15, the authentication system being arranged to transmit a token to a data communications device which is separate from said mobile station.

17. An authentication system according to claim 16, wherein the data communications device is arranged to compare said token and the authentication token received from the mobile station in accordance with a predetermined criterion, and the authentication system is arranged to authenticate the mobile station in the event that the predetermined criterion is satisfied.

18. An authentication system according to claim 16, in which the second authentication service comprises the data communications device comparing said token and the authentication token received from the mobile station in accordance with a predetermined criterion, and the authentication system is arranged to transmit a control message to the mobile station in the event that the predetermined criterion is satisfied, said control message being configured so as to trigger transmission of a further registration request from the mobile station.

19. An authentication system according to claim 18, in which the second authentication service comprises authenticating the mobile station in response to receipt of said further registration request.

20. A mobile terminal (2) arranged to conduct a communications session in a telecommunications system (1), the telecommunications system comprising:
a plurality of radio access nodes;
a first authentication service for authenticating said mobile terminal for a first type of communications session, in which said mobile terminal is authenticated to communicate via a first radio access node of the plurality of radio access nodes (4), such that performance of the first authentication service serves to authenticate the mobile station in respect of communications sessions of the first type involving any radio access node of the plurality of radio access nodes other than the first radio access node; and
a second authentication service for authenticating said mobile terminal for a second type of communications session, in which said mobile terminal is authenticated to communicate via a given radio access node (14), and wherein performance of the second authentication service is required for second type of communications sessions involving radio access nodes other than said given radio access node,
said first and second types of communications session each having an unauthenticated state and an authenticated state,
wherein the mobile terminal is arrange to conduct data communication during a performance of at least part of said second authentication service whereby said mobile terminal is to enter into an authenticated state for a new communications session of said second type, said data communication being conducted via an existing communications session of said first type, when the mobile terminal is in an authenticated state for said existing communications session of said first type,
and wherein the mobile terminal is arranged to transmit a message containing an authentication token, whereby to conduct said data communication, wherein, prior to conducting said data communication, the mobile terminal is arranged to transmit a registration request (S2.5) and thereafter to transmit predetermined data for use in authentication of the mobile terminal to conduct a second type of communications session, said predetermined data comprising the authentication token, wherein said plurality of radio access nodes comprise cellular telecommunications network access nodes and said first authentication service is a cellular telecommunications network authentication service, and
wherein said given radio access node comprises an unlicensed mobile access, UMA, access point and said second authentication service comprises an unlicensed mobile access, UMA, access point authentication service.

21. A computer program, or a set of computer programs, comprising a set of instructions arranged to cause a computer, or a suite of computers, to carry out the method of any one of claim 1 to claim 11.

22. A computer readable carrier comprising the computer program of claim 21.

## Patentansprüche

1. Verfahren zum Authentifizieren einer Anforderung von einer Mobilstation (2), um eine Kommunikationssitzung in einem Telekommunikationssystem (1) auszuführen, wobei das Telekommunikationssystem Folgendes umfasst:
mehrere Funkzugangsknoten (4, 14);
einen ersten Authentifizierungsdienst zum Authentifizieren der Mobilstation für einen ersten Kommunikationssitzungstyp, bei dem die Mobilstation authentifiziert wird, über einen ersten Funkzugangsknoten der mehreren Funkzugangsknoten (4) derartig zu kommunizieren, dass eine Durchführung des ersten Authentifizierungsdiensts dazu dient, die Mobilstation hinsichtlich Kommunikationssitzungen des ersten Typs zu authentifizieren, der alle anderen Funkzugangsknoten der mehreren Funkzugangsknoten als den ersten Funkzugangsknoten einbezieht; und
einen zweiten Authentifizierungsdienst zum Authentifizieren der Mobilstation für einen zweiten Kommunikationssitzungstyp, bei dem die Mobilstation authentifiziert wird, über einen gegebenen Funkzugangsknoten (14) zu kommunizieren, und wobei eine Durchführung des zweiten Authentifizierungsdiensts für den zweiten Kommunikationssitzungstyp erforderlich ist, der andere Funkzugangsknoten als den gegebenen Funkzugangsknoten einbezieht,
wobei der erste und der zweite Kommunikationssitzungstyp jeweils einen nicht authentifizierten Zustand und einen authentifizierten Zustand aufweisen,
wobei das Verfahren Ausführen einer Datenkommunikation mit der Mobilstation, während einer Durchführung mindestens eines Teils des zweiten Authentifizierungsdiensts, wodurch die Mobilstation in einen authentifizierten Zustand für eine neue Kommunikationssitzung des zweiten Typs eintritt, durch Ausführen einer Datenkommunikation über eine vorhandene Kommunikationssitzung des ersten Typs umfasst, wenn die Mobilstation in einem authentifizierten Zustand für die vorhandene Kommunikationssitzung des ersten Typs ist, und wobei die Datenkommunikation Empfangen einer Nachricht umfasst, die ein Authentifizierungstoken von der Mobilstation enthält,
wobei vor Ausführen der Datenkommunikation mit der Mobilstation und als Reaktion auf einen Empfang einer Registrierungsanforderungsnachricht von der Mobilstation (S2.2) der zweite Authentifizierungsdienst die Registrierungsanforderung ablehnt (S2.5) und danach einen Empfang der vorgegebenen Daten von der Mobilstation über die Kommunikationssitzung des ersten Typs überwacht (S4.1), um so die Mobilstation zu authentifizieren, um einen zweiten Kommunikationssitzungstyp auszuführen, wobei die vorgegebenen Daten das Authentifizierungstoken umfassen,
wobei die mehreren Funkzugangsknoten zellulare Telekommunikationsnetz-Zugangsknoten umfassen und der erste Authentifizierungsdienst ein zellularer Telekommunikationsnetz-Authentifizierungsdienst ist und
wobei der gegebene Funkzugangsknoten einen UMA (Unlicensed Mobile Access)-Zugangspunkt umfasst und der zweite Authentifizierungsdienst einen UMA (Unlicensed Mobile Access)-Zugangspunkt-Authentifizierungsdienst umfasst.

2. Verfahren nach Anspruch 1, weiterhin umfassend Benachrichtigen von Befehlen darüber, wie eine Authentifizierung eines Benutzers der Mobilstation ausgeführt wird.

3. Verfahren nach Anspruch 1 oder 2, wobei die Nachricht, die das Authentifizierungstoken enthält, als eine Zieladresse eine internationale Mobilstations-Rufnummer, MSISDN, umfasst.

4. Verfahren nach Anspruch 1, wobei das Authentifizierungstoken eine alphanumerische Folge zur Verwendung beim Authentifizieren der Mobilstation unter Verwendung des zweiten Authentifizierungsdiensts umfasst.

5. Verfahren nach Anspruch 1 oder 4, wobei das Authentifizierungstoken in einer Nachricht enthalten ist, die als eine abgehende Adresse eine internationale Mobilstations-Rufnummer, MSISDN, aufweist.

6. Verfahren nach einem der vorhergehenden Ansprüche, bei dem der zweite Authentifizierungsdienst als Reaktion auf einen Empfang der Registrierungsanforderung über den gegebenen Funkzugangsknoten durchgeführt wird.

7. Verfahren nach einem der vorhergehenden Ansprüche, wobei der zweite Authentifizierungsdienst Senden eines Tokens an eine Datenkommunikationsvorrichtung umfasst, die von der Mobilstation getrennt ist.

8. Verfahren nach Anspruch 7 und 1, bei dem der zweite Authentifizierungsdienst die Datenkommunikationsvorrichtung umfasst, die das Token und das Authentifizierungstoken, das von der Mobilstation empfangen wurde, gemäß einem vorgegebenen Kriterium vergleicht, und die Mobilstation in dem Fall authentifiziert, dass das vorgegebene Kriterium erfüllt ist.

9. Verfahren nach Anspruch 7 und 1, bei dem der zweite Authentifizierungsdienst die Datenkommunikationsvorrichtung umfasst, die das Token und das Authentifizierungstoken, das von der Mobilstation empfangen wurde, gemäß einem vorgegebenen Kriterium vergleicht, und eine Steuernachricht in dem Fall an die Mobilstation sendet, dass das vorgegebene Kriterium erfüllt ist, wobei die Steuernachricht konfiguriert ist, ein Senden einer weiteren Registrierungsanforderung von der Mobilstation auszulösen.

10. Verfahren nach Anspruch 9, bei dem der zweite Authentifizierungsdienst Authentifizieren der Mobilstation als Reaktion auf einen Empfang der weiteren Registrierungsanforderung umfasst.

11. Verfahren nach einem der vorhergehenden Ansprüche, wobei bei dem zweiten Authentifizierungsdienst die Mobilstation authentifiziert wird, um über einen einzelnen Funkzugangsknoten zu kommunizieren.

12. Authentifizierungssystem zum Authentifizieren einer Anforderung von einer Mobilstation (2), um eine Kommunikationssitzung in einem Telekommunikationssystem (1) auszuführen, wobei das Telekommunikationssystem Folgendes umfasst:
mehrere Funkzugangsknoten (4, 14);
einen ersten Authentifizierungsdienst zum Authentifizieren der Mobilstation für einen ersten Kommunikationssitzungstyp, bei dem die Mobilstation authentifiziert wird, über einen ersten Funkzugangsknoten der mehreren Funkzugangsknoten (4) derartig zu kommunizieren, dass eine Durchführung des ersten Authentifizierungsdiensts dazu dient, die Mobilstation hinsichtlich Kommunikationssitzungen des ersten Typs zu authentifizieren, der alle anderen Funkzugangsknoten der mehreren Funkzugangsknoten als den ersten Funkzugangsknoten einbezieht; und
einen zweiten Authentifizierungsdienst zum Authentifizieren der Mobilstation für einen zweiten Kommunikationssitzungstyp, bei dem die Mobilstation authentifiziert wird, über einen gegebenen Funkzugangsknoten (14) zu kommunizieren, und wobei eine Durchführung des zweiten Authentifizierungsdiensts für Kommunikationssitzungen des zweiten Typs erforderlich ist, die andere Funkzugangsknoten als den gegebenen Funkzugangsknoten einbeziehen,
wobei der erste und der zweite Kommunikationssitzungstyp jeweils einen nicht authentifizierten Zustand und einen authentifizierten Zustand aufweisen,
wobei das Authentifizierungssystem eingerichtet ist, eine Datenkommunikation mit der Mobilstation während einer Durchführung mindestens eines Teils des zweiten Authentifizierungsdiensts auszuführen, wodurch die Mobilstation in einen authentifizierten Zustand für eine neue Kommunikationssitzung des zweiten Typs eintritt, wobei die Datenkommunikation durch das Authentifizierungssystem über eine vorhandene Kommunikationssitzung des ersten Typs ausgeführt wird, wenn die Mobilstation in einem authentifizierten Zustand für die vorhandene Kommunikationssitzung des ersten Typs ist,
und wobei das Authentifizierungssystem eingerichtet ist, eine Nachricht zu empfangen, die ein Authentifizierungstoken von der Mobilstation enthält, wodurch die Datenkommunikation ausgeführt wird,
wobei vor Ausführen der Datenkommunikation mit der Mobilstation und als Reaktion auf einen Empfang einer Registrierungsanforderungsnachricht von der Mobilstation (S2.2) der zweite Authentifizierungsdienst eingerichtet ist, die Registrierungsanforderung abzulehnen (S2.5) und danach einen Empfang der vorgegebenen Daten von der Mobilstation zu überwachen (S4.1), um so die Mobilstation zu authentifizieren, um einen zweiten Kommunikationssitzungstyp auszuführen, wobei die vorgegebenen Daten das Authentifizierungstoken umfassen,
wobei die mehreren Funkzugangsknoten zellulare Telekommunikationsnetz-Zugangsknoten umfassen und der erste Authentifizierungsdienst ein zellularer Telekommunikationsnetz-Authentifizierungsdienst ist und
wobei der gegebene Funkzugangsknoten einen UMA-(Unlicensed Mobile Access)-Zugangspunkt umfasst und der zweite Authentifizierungsdienst einen UMA-(Unlicensed Mobile Access)-Zugangspunkt-Authentifizierungsdienst umfasst.

13. Authentifizierungssystem nach Anspruch 12, wobei die mehreren Funkzugangsknoten und der gegebene Zugangsknoten verschiedene Funkzugangstechniken verwenden.

14. Authentifizierungssystem nach einem der Ansprüche 12 bis 13, wobei das Authentifizierungstoken, das an die Mobilstation gesendet wird, alphanumerische Befehle darüber umfasst, wie eine Authentifizierung ausgeführt wird.

15. Authentifizierungssystem nach einem der Ansprüche 12 bis 14, wobei die vorgegebenen Daten ein Token zum Authentifizieren der Mobilstation unter Verwendung des zweiten Authentifizierungsdiensts umfassen.

16. Authentifizierungssystem nach Anspruch 15, wobei das Authentifizierungssystem eingerichtet ist, ein Token an eine Datenkommunikationsvorrichtung zu senden, die von der Mobilstation getrennt ist.

17. Authentifizierungssystem nach Anspruch 16, wobei die Datenkommunikationsvorrichtung eingerichtet ist, das Token und das Authentifizierungstoken, das von der Mobilstation empfangen wurde, gemäß einem vorgegebenen Kriterium zu vergleichen, und das Authentifizierungssystem eingerichtet ist, die Mobilstation in dem Fall zu authentifizieren, dass das vorgegebene Kriterium erfüllt ist.

18. Authentifizierungssystem nach Anspruch 16, bei dem der zweite Authentifizierungsdienst die Datenkommunikationsvorrichtung umfasst, die das Token und das Authentifizierungstoken, das von der Mobilstation empfangen wurde, gemäß einem vorgegebenen Kriterium vergleicht, und das Authentifizierungssystem eingerichtet ist, eine Steuernachricht in dem Fall an die Mobilstation zu senden, dass das vorgegebene Kriterium erfüllt ist, wobei die Steuernachricht konfiguriert ist, ein Senden einer weiteren Registrierungsanforderung von der Mobilstation auszulösen.

19. Authentifizierungssystem nach Anspruch 18, bei dem der zweite Authentifizierungsdienst Authentifizieren der Mobilstation als Reaktion auf einen Empfang der weiteren Registrierungsanforderung umfasst.

20. Mobiles Endgerät (2), das eingerichtet ist, eine Kommunikationssitzung in einem Telekommunikationssystem (1) auszuführen, wobei das Telekommunikationssystem Folgendes umfasst:
mehrere Funkzugangsknoten;
einen ersten Authentifizierungsdienst zum Authentifizieren des mobilen Endgeräts für einen ersten Kommunikationssitzungstyp, bei dem das mobile Endgerät authentifiziert wird, über einen ersten Funkzugangsknoten der mehreren Funkzugangsknoten (4) derartig zu kommunizieren, dass eine Durchführung des ersten Authentifizierungsdiensts dazu dient, die Mobilstation hinsichtlich Kommunikationssitzungen des ersten Typs zu authentifizieren, der alle anderen Funkzugangsknoten der mehreren Funkzugangsknoten als den ersten Funkzugangsknoten einbezieht; und
einen zweiten Authentifizierungsdienst zum Authentifizieren des mobilen Endgeräts für einen zweiten Kommunikationssitzungstyp, bei dem das mobile Endgerät authentifiziert ist, um über einen gegebenen Funkzugangsknoten (14) zu kommunizieren,
und wobei eine Durchführung des zweiten Authentifizierungsdiensts für Kommunikationssitzungen des zweiten Typs erforderlich ist, die andere Funkzugangsknoten als den gegebenen Funkzugangsknoten einbeziehen,
wobei der erste und der zweite Kommunikationssitzungstyp jeweils einen nicht authentifizierten Zustand und einen authentifizierten Zustand aufweisen,
wobei das mobile Endgerät eingerichtet ist, eine Datenkommunikation während einer Durchführung mindestens eines Teils des zweiten Authentifizierungsdiensts auszuführen, wodurch das mobile Endgerät in einen authentifizierten Zustand für eine neue Kommunikationssitzung des zweiten Typs eintritt, wobei die Datenkommunikation über eine vorhandene Kommunikationssitzung des ersten Typs ausgeführt wird, wenn das mobile Endgerät in einem authentifizierten Zustand für die vorhandene Kommunikationssitzung des ersten Typs ist,
und wobei das mobile Endgerät eingerichtet ist, eine Nachricht zu senden, die ein Authentifizierungstoken enthält, wodurch die Datenkommunikation ausgeführt wird,
wobei das mobile Endgerät eingerichtet ist, vor dem Ausführen der Datenkommunikation eine Registrierungsanforderung zu senden (S2.5) und danach vorgegebene Daten zur Verwendung bei einer Authentifizierung des mobilen Endgeräts zu senden, um einen zweiten Kommunikationssitzungstyp auszuführen, wobei die vorgegebenen Daten das Authentifizierungstoken umfassen,
wobei die mehreren Funkzugangsknoten zellulare Telekommunikationsnetz-Zugangsknoten umfassen und der erste Authentifizierungsdienst ein zellularer Telekommunikationsnetz-Authentifizierungsdienst ist und
wobei der gegebene Funkzugangsknoten einen UMA (Unlicensed Mobile Access)-Zugangspunkt umfasst und der zweite Authentifizierungsdienst einen UMA (Unlicensed Mobile Access)-Zugangspunkt-Authentifizierungsdienst umfasst.

21. Computerprogramm oder Satz von Computerprogrammen, umfassend einen Satz von Befehlen, die eingerichtet sind, zu bewirken, dass ein Computer oder eine Reihe von Computern das Verfahren nach einem der Ansprüche 1 bis 11 ausführen.

22. Computerlesbarer Träger, umfassend das Computerprogramm nach Anspruch 21.

## Revendications

1. Procédé d'authentification d'une requête provenant d'une station mobile (2) pour conduire une session de communication dans un système de télécommunications (1), le système de télécommunications comprenant :
une pluralité de noeuds d'accès radio (4, 14) ;
un premier service d'authentification destiné à authentifier ladite station mobile pour un premier type de session de communication, dans lequel ladite station mobile est authentifiée pour communiquer via un premier noeud d'accès radio de la pluralité de noeuds d'accès radio (4), de sorte que l'exécution du premier service d'authentification sert à authentifier la station mobile par rapport aux sessions de communication du premier type impliquant tout noeud d'accès radio de la pluralité de noeuds d'accès radio autre que le premier noeud d'accès radio ; et
un second service d'authentification destiné à authentifier ladite station mobile pour un second type de session de communication, dans lequel ladite station mobile est authentifiée pour communiquer via un noeud d'accès radio donné (14), et dans lequel l'exécution du second service d'authentification est requise pour le second type de sessions de communication impliquant des noeuds d'accès radio autres que ledit noeud d'accès radio,
lesdits premier et second types de session de communication ayant chacun un état non authentifié et un état authentifié,
ledit procédé comprenant la conduite d'une communication de données avec la station mobile, pendant une performance d'au moins une partie dudit second service d'authentification, moyennant quoi ladite station mobile doit entrer dans un état authentifié pour une nouvelle session de communication dudit second type, en conduisant une communication de données via une session de communication existante dudit premier type, lorsque la station mobile est dans un état authentifié pour ladite session de communication existante dudit premier type et dans lequel ladite communication de données comprend la réception d'un message contenant un jeton d'authentification de ladite station mobile,
dans lequel, avant de conduire ladite communication de données avec ladite station mobile et en réponse à la réception d'un message de requête d'enregistrement de la part de la station mobile (S2.2), ledit second service d'authentification rejette ladite requête d'enregistrement (S2.5) puis surveille la réception de données prédéterminées provenant de la station mobile via la session de communication du premier type (S4.1) de façon à authentifier la station mobile pour qu'elle conduise un second type de session de communication, lesdites données prédéterminées comprenant le jeton d'authentification,
dans lequel ladite pluralité de noeuds d'accès radio comprend des noeuds d'accès radio de réseau cellulaire de télécommunications et ledit premier service d'authentification est un service d'authentification de réseau cellulaire de télécommunications, et
dans lequel ledit noeud d'accès radio donné comprend un point d'accès mobile non-licencié, UMA, et ledit second service d'authentification comprend un service d'authentification de point d'accès mobile non-licencié, UMA.

2. Procédé selon la revendication 1, comprenant en outre la notification d'instructions sur la manière de conduire l'authentification à un utilisateur de ladite station mobile.

3. Procédé selon la revendication 1 ou la revendication 2, dans lequel ledit message contenant ledit jeton d'authentification comprend comme adresse de destination un numéro MSISDN d'appel international de stations mobiles.

4. Procédé selon la revendication 1, dans lequel ledit jeton d'authentification comprend une chaîne alphanumérique destinée à être utilisée pour l'authentification de ladite station mobile utilisant ledit second service d'authentification.

5. Procédé selon la revendication 1 ou la revendication 4, dans lequel ledit jeton d'authentification est contenu dans un message ayant comme adresse d'origine un numéro MSISDN d'appel international de stations mobiles.

6. Procédé selon l'une quelconque des revendications précédentes, dans lequel ledit second service d'authentification est exécuté en réponse à la réception de ladite requête d'enregistrement via le noeud d'accès radio donné.

7. Procédé selon l'une quelconque des revendications précédentes, dans lequel ledit second service d'authentification comprend la transmission d'un jeton à un dispositif de communication de données qui est distinct de ladite station mobile.

8. Procédé selon la revendication 7 et la revendication 1, dans lequel le second service d'authentification comprend la comparaison par le dispositif de communication de données dudit jeton et du jeton d'authentification reçu depuis la station mobile conformément à un critère prédéterminé, et l'authentification de la station mobile au cas où le critère prédéterminé est rempli.

9. Procédé selon la revendication 7 et la revendication 1, dans lequel le second service d'authentification comprend la comparaison par le dispositif de communication de données dudit jeton et du jeton d'authentification reçu depuis la station mobile conformément à un critère prédéterminé, et la transmission d'un message de commande à la station mobile au cas où le critère prédéterminé est rempli, ledit message de commande étant configuré de façon à déclencher la transmission d'une requête d'enregistrement supplémentaire de la part de la station mobile.

10. Procédé selon la revendication 9, dans lequel le second service d'authentification comprend l'authentification de la station mobile en réponse à la réception de ladite requête d'enregistrement supplémentaire.

11. Procédé selon l'une quelconque des revendications précédentes, dans lequel dans ledit second service d'authentification, ladite station mobile est authentifiée pour communiquer via un unique noeud d'accès radio.

12. Système d'authentification destiné à authentifier une requête provenant d'une station mobile (2) pour conduire une session de communication dans un système de télécommunications (1), le système de télécommunications comprenant :
une pluralité de noeuds d'accès radio (4, 14) ;
un premier service d'authentification destiné à authentifier ladite station mobile pour un premier type de session de communication, dans lequel ladite station mobile est authentifiée pour communiquer via un premier noeud d'accès radio de la pluralité de noeuds d'accès radio (4), de sorte que l'exécution du premier service d'authentification sert à authentifier la station mobile par rapport aux sessions de communication du premier type impliquant tout noeud d'accès radio de la pluralité de noeuds d'accès radio autre que le premier noeud d'accès radio ; et
un second service d'authentification destiné à authentifier ladite station mobile pour un second type de session de communication, dans lequel ladite station mobile est authentifiée pour communiquer via un noeud d'accès radio donné (14), et dans lequel l'exécution du second service d'authentification est requise pour le second type de sessions de communication impliquant des noeuds d'accès radio autres que ledit noeud d'accès radio,
lesdits premier et second types de session de communication ayant chacun un état non authentifié et un état authentifié,
le système d'authentification étant agencé pour conduire une communication de données avec la station mobile, pendant une performance d'au moins une partie dudit second service d'authentification, moyennant quoi ladite station mobile doit entrer dans un état authentifié pour une nouvelle session de communication dudit second type, ladite communication de données étant conduite par le système d'authentification via une session de communication existante dudit premier type, lorsque la station mobile est dans un état authentifié pour ladite session de communication existante dudit premier type,
et dans lequel le système d'authentification est agencé pour recevoir un message contenant un jeton d'authentification depuis ladite station mobile, au moyen duquel ladite communication de données est conduite,
dans lequel, avant de conduire ladite communication de données avec ladite station mobile et en réponse à la réception d'un message de requête d'enregistrement de la part de la station mobile (S2.2), ledit second service d'authentification est agencé pour rejeter ladite requête d'enregistrement (S2.5) puis pour surveiller la réception de données prédéterminées depuis la station mobile (S4.1) afin d'authentifier la station mobile pour conduire un second type de session de communication, lesdites données prédéterminées comprenant le jeton d'authentification,
dans lequel ladite pluralité de noeuds d'accès radio comprend des noeuds d'accès radio de réseau cellulaire de télécommunications et ledit premier service d'authentification est un service d'authentification de réseau cellulaire de télécommunications, et
dans lequel ledit noeud d'accès radio donné comprend un point d'accès mobile non-licencié, UMA, et ledit second service d'authentification comprend un service d'authentification de point d'accès mobile non-licencié, UMA.

13. Système d'authentification selon la revendication 12, dans lequel ladite pluralité de noeuds d'accès radio et ledit noeud d'accès donné utilisent des technologies d'accès radio différentes.

14. Système d'authentification selon l'une quelconque des revendications 12 et 13, dans lequel ledit jeton d'authentification transmis à la station mobile comprend des instructions alphanumériques sur la manière de conduire l'authentification.

15. Système d'authentification selon l'une quelconque des revendications 12 à 14, dans lequel lesdites données prédéterminées comprennent un jeton pour l'authentification de ladite station mobile utilisant ledit second service d'authentification.

16. Système d'authentification selon la revendication 15, le système d'authentification étant agencé pour transmettre un jeton à un dispositif de communication de données qui est distinct de ladite station mobile.

17. Système d'authentification selon la revendication 16, dans lequel le dispositif de communication de données est agencé pour comparer ledit jeton et le jeton d'authentification reçu depuis la station mobile conformément à un critère prédéterminé, et le système d'authentification est agencé pour authentifier la station mobile au cas où le critère prédéterminé est rempli.

18. Système d'authentification selon la revendication 16, dans lequel le second service d'authentification comprend le dispositif de communication de données comparant ledit jeton et le jeton d'authentification reçu depuis la station mobile conformément à un critère prédéterminé, et le système d'authentification est agencé pour transmettre un message de commande à la station mobile au cas où le critère prédéterminé est rempli, ledit message de commande étant configuré de façon à déclencher la transmission d'une requête d'enregistrement supplémentaire de la part de la station mobile.

19. Système d'authentification selon la revendication 18, dans lequel le second service d'authentification comprend l'authentification de la station mobile en réponse à la réception de ladite requête d'enregistrement supplémentaire.

20. Terminal mobile (2) agencé pour conduire une session de communication dans un système de télécommunications (1), le système de télécommunications comprenant :
une pluralité de noeuds d'accès radio ;
un premier service d'authentification destiné à authentifier ladite station mobile pour un premier type de session de communication, dans lequel ladite station mobile est authentifiée pour communiquer via un premier noeud d'accès radio de la pluralité de noeuds d'accès radio (4), de sorte que l'exécution du premier service d'authentification sert à authentifier la station mobile par rapport aux sessions de communication du premier type impliquant tout noeud d'accès radio de la pluralité de noeuds d'accès radio autre que le premier noeud d'accès radio ; et
un second service d'authentification destiné à authentifier ladite station mobile pour un second type de session de communication, dans lequel ledit terminal mobile est authentifié pour communiquer via un noeud d'accès radio donné (14),
et dans lequel l'exécution du second service d'authentification est requise pour le second type de sessions de communication impliquant des noeuds d'accès radio autres que ledit noeud d'accès radio donné,
lesdits premier et second types de sessions de communication ayant chacun un état non authentifié et un état authentifié,
dans lequel le terminal mobile est agencé pour conduire une session de communication pendant une performance d'au moins une partie dudit second service d'authentification moyennant quoi ledit terminal mobile doit entrer dans un état authentifié pour une nouvelle session de communication dudit second type, ladite communication de données étant conduite via une session de communication existante dudit premier type, lorsque le terminal mobile est dans un état authentifié pour ladite session de communication existante dudit premier type,
et dans lequel le terminal mobile est agencé pour transmettre un message contenant un jeton d'authentification au moyen duquel ladite communication de données est conduite,
dans lequel, avant de conduire ladite communication de données, le terminal mobile est agencé pour transmettre une requête d'enregistrement (S2.5) puis pour transmettre des données prédéterminées destinées à être utilisées pour l'authentification du terminal mobile pour qu'il conduise un second type de session de communication, lesdites données prédéterminées comprenant le jeton d'authentification,
dans lequel la pluralité de noeuds d'accès radio comprend des noeuds d'accès radio de réseau cellulaire de télécommunications et ledit premier service d'authentification est un service d'authentification de réseau cellulaire de télécommunications, et
dans lequel ledit noeud d'accès radio comprend un point d'accès mobile non-licencié, UMA, et ledit second service d'authentification est un service d'authentification de point d'accès mobile non-licencié, UMA.

21. Programme informatique ou ensemble de programmes informatiques, comprenant un jeu d'instructions agencées pour amener un ordinateur ou une série d'ordinateurs à exécuter le procédé selon l'une quelconque des revendications 1 à 11.

22. Support lisible par ordinateur comprenant le programme informatique selon la revendication 21.
